# EUROPEAN PATENT SPECIFICATION

(11) **EP 1 702 904 B1**
(45) Date of publication and mention of the grant of the patent: **17.10.2007**
(21) Application number: 06386003.5
(22) Date of filing: 13.03.2006
(51) Int. Cl.: C04B 35/48, C04B 35/16, C04B 35/447, C04B 35/50

(54) **New method for the production of NZP ceramic bodies having high porosity and high flexural strength**
Neue Methode zur Herstellung von NZP-keramischen Körpern mit hoher Porosität und hoher Biegefestigkeit
Nouvelle méthode pour la production de céramiques en NZP avec une haute porosité et haute rèsistance à la flexion

(30) Priority: 17.03.2005 GR 2005100137
(43) Date of publication of application: 20.09.2006
(73) Proprietor: Cereco S.A., 34100 Chalkida (GR)
(72) Inventor: Stournaras, Constantine, 34100 Chalkida (GR); Dedeloudis, Christos, 17123 N. Smirni (GR); Economou, Parastevi, 34100 Chalkida (GR)

(56) References cited:
- US-A- 4 675 302
- US-A1- 2002 061 811
- US-A1- 2002 132 720
- TANTRI P ET AL: "High temperature X-ray studies on barium and strontium zirconium phosphate based low thermal expansion materials" MATERIALS RESEARCH BULLETIN, PERGAMON PRESS, NEW YORK, US, vol. 37, no. 6, May 2002 (2002-05), pages 1141-1147, XP004361304 ISSN: 0025-5408

## Description

This invention relates to the production of NZP type structures with a new method that results to a structure with high porosity and high flexural strength without the use of any sintering agents or pore formers. These NZP structures are suitable for many applications such as high temperature filtration applications as in diesel soot filtration.

NZP ceramics are refractory materials having the general formula RₓZ₄P_{6-y}Si_{y}O₂₄, where R stands for an alkali or an earth alkali element, x takes values between 0 and 8, Z stands for Zr, Ti, Nb, Ta, Y or a lanthanide, P stands for phosphorus, Si stands for silicon, O stands for oxygen and y takes values between 0 and 6. These ceramics have high refractoriness (high melting point) and low coefficient of thermal expansion (CTE), and therefore can be used in high temperature applications.

Such structures can be used also in different high temperature filtration applications, like diesel particulate filtration ("soot filters"), if their high refractoriness and their low thermal expansion coefficient can be combined with high porosity and high flexural strength.
Present methods of making NZP bodies are disclosed in the following US patents 4.675.302, 4.751.206, 4.801.556, 4.925.816, 5.102.836, 5.128.288, 5.254.510, 5.488.018 and in the WO patents 01/25165 and 01/25166. In these patents, different bodies where produced based on NZP, having either low porosity or in other case low mechanical strength due to high porosity. Based on the WO patents 01/25165 and 01/25166, NZP-structures with porosities above 20% and a four-point modulus of rupture as measured on a solid rod of at least 2,07 N/mm² (300 psi) are produced. The produced structures obtain their porosity with the addition of pore formers (graphite, flour) and their flexural strength with the addition of a sintering agent in the mixture. The example with the highest obtained mechanical strength was a structure with 34.2% porosity and 18,73 N/mm² (2712 psi) four-point flexural strength. However, cordierite, that is the material mainly used up to now for making diesel soot filters, shows a flexural strength of 17,96 N/mm² (2600 psi) for structures with 33% porosity. Therefore, this high mechanical strength of the NZP-type structure is not enough in order to replace cordierite in the diesel soot filters.

A need therefore exists for a material that has high porosity combined with high mechanical strength well-above cordierite and in the same time, having high refractoriness that cordierite does not have and low thermal expansion.

The present invention relates to the production method of a refractory ceramic structure, which is called generally "NZP" phase, by a new method using ammonium hydrogen phosphate as raw material. By NZP phase a solid homogeneous phase is meant in which the arrangement of atoms is generally similar to that of the type NaZr₂P₃O₁₂, but in which other substituent atoms replace some or all of the sodium, zirconium, or phosphorus. The general formula of the NZP family is RₓZ₄P_{6-y}Si_{y}O₂₄, where R stands for an alkali or an earth alkali element, x takes values between 0 and 8, Z stands for Zr, Ti, Nb, Ta, Y or a lanthanide, P stands for phosphorus, Si stands for silicon, O stands for oxygen and y takes values between 0 and 6. An especially suited formula for diesel particulate filtration is Ba_{1+y}Zr₄P_{6-2y}Si_{2y}O₂₄ where y takes values between 0 and 1.

The new production method of NZP ceramics includes the formation of a homogeneous mixture of the raw materials by wet milling, the firing of this mixture, the wet-milling of the resulting fired powder, the shaping of this powder to a green body and the final firing to form the product structure.

The NZP-forming raw materials for this invention are metal carbonate salts as source of R, metal oxides as source of Z, silicon oxide (SiO₂) in a crystalline or amorphous state as a source of silicon and ammonium hydrogen phosphate (NH₄-H₂PO₄) as source for phosphorus.
The use of the latter raw material as source of phosphorus is an inventive way for obtaining a highly porous NZP structure with high mechanical strength, since during firing; the ammonium hydrogen phosphate breaks down to volatiles like ammonia thus creating great porosity.
In order to take advantage of this porosity created by the raw materials and use it in order to obtain a highly porous and durable final NZP structure without the use of sintering aid or pore former, a two step-production process was invented: in the first step the raw materials react at temperatures up to 1000°C forming a very porous NZP precursor powder and in the second step at temperature above 1200°C the NZP precursor powder reacts forming a porous NZP structure. The fact that the precursor powder is very active together with the reaction that takes place in the second step are responsible for the high mechanical strength obtained with this method.

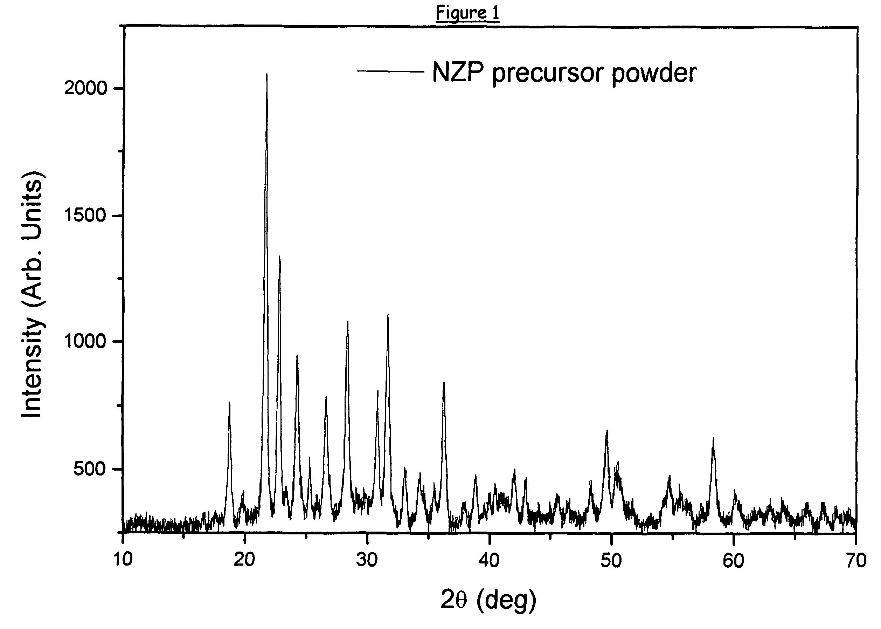

Specifically, the stoichiometric quantities of the raw materials are homogeneously mixed by wet milling together with acetone and zirconia balls as milling agent for 1 up to 48 h and preferably 20h. The resulting slurry is dried at 40 up to 70°C for 1 up to 24h, and preferably at 60°C for 10h. The dried powder is then fired at 600 up to 1000°C for 1h up to 24 h and preferably at 900°C. The resulting powder is a NZP precursor as can be seen in Figure 1 and does not have the final NZP structure. The precursor powder is then wet-milled using deionized water and zirconia balls for 1 up to 48 h. The water-precursor slurry is dried at 105 up to 120°C for 1 up to 24h, and preferably at 110°C for 10h. The resulting dried precursor is mixed with a liquid preferably water, binder, lubricant and plasticizer and shaped into a green body by a method as slip casting, pressure casting, tape casting, dry pressing, injection molding, centrifugal casting or extrusion. The resulting green body is then dried in an oven or by using a microwave dryer. The dried green body is then fired in an electrical kiln at temperatures 1200°C up to 1700°C for 1 up to 48h with a heating rate of 1 up to 5°C/min. The result of this process is a highly porous NZP structure with high mechanical strength.

In order to illustrate the invention, the following non-limiting examples are presented. All parts, portions, and percentages are on weight basis. All these examples refer to ceramic bodies with the NZP structure Ba_{1+y}Zr₄P_{6-2y}Si_{2y}O₂₄, where y = 0-0.4.

### Example 1

In this example, 10 NZP formulations belonging in the family Bn_{1+y}Zr₄P_{6-2y}Si_{2y}O₂₄ were prepared, starting with y=0, 0.05, 0.10, 0.15, 0.20, 0.22, 0.25, 0.30, 0.35 and 0.40. The stoichiometric amounts of BaCO₃, monoclinic ZrO₂, NHaH₂PO₄ and amorphous SiO₂ were wet-milled together with acetone and zirconia balls of 7-12 mm diameter for 20h. The weight ratio raw materials: zirconia balls : acetone was equal to 1:5:1. The wet-milling process occurred in a rolling system working at 100rpm using a plastic jar that contained the materials with the acetone and the zirconia balls. After completion of the wet milling, the zirconia balls were separated by sedimentation, while the remaining slurry was dried out in an electrical oven at 60°C for 16h. The dried powder was calcined up in an electrical kiln up to a temperature of 800-1000°C for a period of 5-7 h. The powder was left for 1h at this temperature and then was cooled down to room temperature in a period of 3h. The calcined powder was wet-milled again together with deionized water and zirconia balls for 20h. The weight ratio was (powder: zirconia balls : water) = 1:5:1. The zirconia balls were separated by sedimentation and the slurry was dried out in an electrical oven operating at 110°C for 16h. The calcined powder was then mixed with 27wt% deion.water, 8wt% methylcellulose as binder and 2wt% sodium stearate as lubricant, in a Z-blade mixer in order to form an extrudable mixture. The mixture was then extruded into cylindrical rods having a diameter of 0.6 cm. The extruded materials were cut to the desired length and then dried in a microwave dryer for 1h. The samples were placed on an alumina pallet and fired in an electrically heated kiln at a rate of 300°C/h to a maximum temperature of 1400°C for 16h.

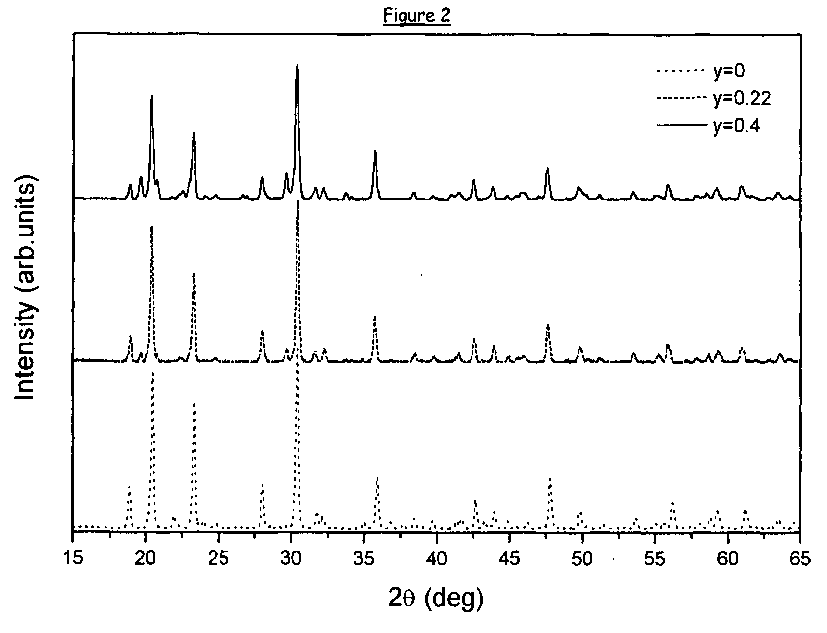

The porosities of the samples were measured by Archimedes method and by mercury porosimetry. Mean coefficients of thermal expansion from 22 to 600°C were measured on a rod using a dilatometer. Four-point flexural strength was measured on rods. The calcined powder and final product were characterized by powder X-ray diffractometry. The composition, the firing parameters and the properties of the final products can be seen in Table 1. The X-ray diffraction pattern of the final NZP structures can be seen in Figure 2 for the case y=0, 0.22 and 0.40.

Comparative examples 1-1 to 1-10 demonstrate that Ba_{1+y}Zr₄P_{6-2y}Si_{2y}O₂₄ ceramic bodies have high porosity in the levels 31 to 51 % while the flexural strength is ranging between 19,34 N/mm² and 41,44 N/mm² (2800 and 6000 psi). The CTE remains in the range of -1 to 1.5 × 10⁻⁶ °C⁻¹ for y in the range 0 to 0.4. The reported flexural strength is much greater than the ones reported in the previous patents and for similar porosities, without however using any sintering aid or pore former.

Especially the example 1-7 (Flexural strength: 12,55 N/mm² (3365 psi), 43% porosity) in comparison to the example 3-1 of WO patent 01/25165 (Flexural strength: 1817 psi, 27.5% porosity) indicates that this inventive method can produce NZP ceramic bodies with greater flexural strength and with much higher porosity compared to those prepared with sintering aids.

### Example 2

In this example, the NZP formulation Ba_{1.22}Zr₄P_{5.56}Si_{0.44}O₂₄ was prepared in the same way as in the example 1, with the difference that the dried extruded rods were fired in an electrically heated kiln at a rate of 300°C/h to a maximum temperature of 1400°C for 1, 4, 8 and 16h. The samples were characterized again with the same methods and the properties of the final products can be seen in Table 2.

Comparative examples 2-1 to 2-4 illustrate the effect of firing time in the physical properties of the final product, where the porosity is decreased by increasing the heating time with a simultaneous increase of the flexural strength. It is remarkable however, that even with a heating time of 1h, an NZP ceramic body is produced having much higher flexural strength than the ones reported in previous patents and for porosity close to 50%.

From all these experiments, it is apparent that with this inventive method, utilizing ammonium hydrogen phosphate as source of phosphorus and a two step firing process, highly porous NZP structures can be produced which exhibit additionally an extremely high flexural strength without the need for sintering aid or pore former. Materials prepared in this way can replace cordierite in several applications including diesel soot filters.
Figure 1 shows the X-ray diffraction pattern of the
   Ba_{1.22}Zr₄P_{5.56} Si_{0.44}O₂₄ precursor powder and Figure 2 shows the X-ray diffraction pattern of the final structure Ba_{1+y}Zr₄P_{6-2y} Si_{2y}O₂₄ for y=0, 0.22 and 0.40.

**Table 1 Examples of the family Ba_{1+y}Zr₄P_{6-2y}Si_{2y}O₂₄**

| **Example Number** | 1-1 | 1-2 | 1-3 | 1-4 | 1-5 | 1-6 | 1-7 | 1-8 | 1-9 | 1-10 |
|---|---|---|---|---|---|---|---|---|---|---|
| **y** | 0 | 0.05 | 0.10 | 0.15 | 0.20 | 0.22 | 0.25 | 0.30 | 0.35 | 0.40 |
| **NZP- forming raw materials** | | | | | | | | | | |
| BaCO₃ | 14.3 | 15.0 | 15.65 | 16.3 | 17 | 17.2 | 17.6 | 18.3 | 18.9 | 19.55 |
| ZrO₂ | 35.6 | 35.5 | 35.4 | 35.3 | 35.15 | 35.1 | 35.0 | 34.9 | 34.8 | 34.7 |
| NH₄H₂PO₄ | 50.1 | 49.1 | 48.1 | 47.1 | 46.15 | 45.8 | 45.2 | 44.25 | 43.3 | 42.35 |
| SiO₂ | 0 | 0.4 | 0.85 | 1.3 | 1.7 | 1.9 | 2.1 | 2.55 | 3.0 | 3.4 |
| **Binder, Lubricant and Solvent** | | | | | | | | | | |
| Methylcellulose | 8 | 8 | 8 | 8 | 8 | 8 | 8 | 8 | 8 | 8 |
| Sodium stearate | 2 | 2 | 2 | 2 | 2 | 2 | 2 | 2 | 2 | 2 |
| Water | 27 | 27 | 27 | 27 | 27 | 27 | 27 | 27 | 27 | 27 |
| **Firing Conditions** | | | | | | | | | | |
| Max. Temperature (°C) | 1400 | 1400 | 1400 | 1400 | 1400 | 1400 | 1400 | 1400 | 1400 | 1400 |
| Hold Time (h) | 16 | 16 | 16 | 16 | 16 | 16 | 16 | 16 | 16 | 16 |
| **Physical Properties of the Final Product** | | | | | | | | | | |
| CTE (10⁻⁶ °C⁻¹) | 1.5 | 1.5 | 1.3 | 1 | 0.3 | 0.15 | -0.6 | -1 | -0.7 | - |
| % Porosity | 31 | 36.9 | 39.3 | 41.4 | 43.7 | 35.8 | 43.3 | 51.1 | 43.1 | 44.3 |
| Four-Point Flexural Strength | | | | | | | | | | |
| (N/mm²) | 41,16 | 34,02 | 34,86 | 25,49 | 23,59 | 40,09 | 23,24 | 19,85 | 31,69 | 21,37 |
| (psi) | (5959) | 4926) | (5047) | (3690) | (3416) | (5804) | (3365) | (2874) | (4588) | (3094) |

**Table 2 Effect of sintering time on the properties of the final product**

| **Example Number** | 2-1 | 2-2 | 2-3 | 2-4 |
|---|---|---|---|---|
| **y** | 0.22 | 0.22 | 0.22 | 0.22 |
| **NZP- forming raw materials** | | | | |
| BaCO₃ | 17.2 | 17.2 | 17.2 | 17.2 |
| ZrO₂ | 35.1 | 35.1 | 35.1 | 35.1 |
| NH₄H₂PO₄ | 45.8 | 45.8 | 45.8 | 45.8 |
| SiO₂ | 1.9 | 1.9 | 1.9 | 1.9 |
| **Binder, Lubricant and Solvent** | | | | |
| Methylcellulose | 8 | 8 | 8 | 8 |
| Sodium stearate | 2 | 2 | 2 | 2 |
| water | 27 | 27 | 27 | 27 |
| **Firing Conditions** | | | | |
| Max. Temperature (°C) | 1400 | 1400 | 1400 | 1400 |
| Hold Time (h) | 1 | 4 | 8 | 16 |
| **Physical Properties of the Final Product** | | | | |
| CTE (10⁻⁶ °C⁻¹) | -0.2 | 0.2 | 0.2 | 0.15 |
| % Porosity | 46.0 | 42.4 | 37.3 | 35.8 |
| Four-Point Flexural Strength | | | | |
| (N/mm²) | 17,69 | 26,89 | 40,49 | 40,09 |
| (psi) | (2561) | (3893) | (5862) | (5804) |

## Claims

1. A method of making a NZP ceramic structure with open porosity above 20% and flexural strength above 10,36 N/mm² (1500 psi) without the use of any sintering aid or pore former, the method comprising of:
a. Forming a mixture comprising NZP-forming raw materials powders consisting of metal oxides, metal carbonate salts and phosphate salts, capable of reacting to form in the end an NZP structure having the general formula RₓZ₄P_{6-y}Si_{y}O₂₄, where R stands for an alkali or an alkaline earth atom, x takes values between 0 and 8, Z stands for Zr, Ti, Nb, Ta, Y or a lanthanide, P stands for phosphorus , Si stands for silicon, O stands for oxygen and y takes values between 0 and 6.
b. Wet-milling the raw materials in the presence of a liquid.
c. Firing the raw materials mixture in order to react and form a highly porous precursor powder
d. Wet-milling the precursor powder and then forming an extrudable mass
e. Shaping into a green body
f. Firing the green structure in order the precursor powder to react and form the NZP phase and in the same time produce a fired structure having NZP as the main phase and having an open porosity of at least 20%

2. A method of claim 1 wherein the NZP structure is produced in a two-step process, forming a precursor powder in the first step and forming the NZP structure from the precursor powder

3. A method of claim 1 wherein the ammonium hydrogen phosphate (NH₄H₂PO₄) is the source of phosphorus. The source of Z and R atoms are metal oxides and metal carbonate salts respectively, while the source of silicon is silicon oxide in crystalline or amorphous state.

4. A method of claim 3 wherein the liquid in the wet-milling of the raw materials is acetone

5. A method of claim 4 wherein the raw materials are fired in order to get an NZP precursor powder

6. A method of claim 5 wherein the firing temperature of the raw materials is about 600°C to 1000°C and the hold times from 1 to 24h

7. A method of claim 7 wherein the precursor powder is shaped by extrusion, dry pressing, slip-casting, tape casting, injection molding or centrifugal casting.

8. A method of claim 8 wherein the firing temperature of the green body is between about 1200 °C and 1700 °C and the hold times between 1 and 48h.

## Patentansprüche

1. Eine Produktionsmethode von NZP keramischer Struktur mit geöffneter Porosität über 20% und flexural Stärke über 10,36 N/mm2 (1500 psi), ohne den Gebrauch irgendeines sinternden Helfers oder Porenformers. Die Methode:
a. Die Bildung einer Mischung, die NZP-bildende Rohstoffe enthält, pulverisiert bestehende Metalloxide, Metallkarbonatsalze und die Phosphatsalze, die fähig ist im Endeffekt eine Form zu bilden, die eine NZP Struktur hat mit der allgemeinen Formel: RxZ4P6-ySiyO24 ,wobei R für ein Alkali oder ein Erdalkaliatom steht, x Werte zwischen 0 und 8 einnimmt, Z steht für Zr, Ti, Nb, Ta, Y oder einen Lanthanide, P steht für Phosphor, Silikon steht für Silikon, O steht für Sauerstoff und y nimmt Werte zwischen 0 und 6 ein.
b. Wet-milling der Rohstoffe in Anwesenheit einer Flüssigkeit
c. Die Rohstoffmischung wird abgefeuert, um zu reagieren und ein in hohem Grade poröses Vorläuferpuder zu bilden
d. Wet-milling des Vorläuferpuders und dann eine extrudierbare Masse bilden
e. Formen eines grünen Körpers
f. Die grüne Struktur wird abgefeuert, damit das Vorläuferpuder reagiert und, um die NZP Phase zu bilden und gleichzeitig produziert eine abgefeuerte Struktur, die NZP als die Hauptphase und eine geöffneten Porosität von mindestens 20% hat

2. Eine Methode von Behauptung 1, worin die NZP Struktur in einem zweistufigen Prozeß produziert wird, ein Vorläuferpuder im ersten Schritt bildet und die NZP Struktur aus dem Vorläuferpuder gewinnt.

3. Eine Methode von Behauptung 1, worin das Ammoniumwasserstoffphosphat (NH4H2P04) die Quelle des Phosphors ist. Der Ursprung der Atome Z und R sind Metalloxide beziehungsweise Metallkarbonatsalze, während die Quelle des Silikons Silikonoxid im kristallenen oder formlosen Zustand ist.

4. Eine Methode von Behauptung 3, worin die Flüssigkeit im Wet-milling der Rohstoffe Azeton ist

5. Eine Methode von Behauptung 4, worin die Rohstoffe abgefeuert werden, um ein NZP Vorläuferpuder zu erhalten

6. Eine Methode von Anspruch 5, worin die Zündungtemperatur der Rohstoffe ungefähr 600°C bis 1000°C hat und die Haltezeiten 1 zu 24h beinhaltet.

7. Eine Methode von Behauptung 6, worin das Vorläuferpuder durch Extrusion, dry-pressing, slip-casting, Gleitengußteil, Klebebandgußteil, Injektion oder zentrifugales casting geformt wird

8. Eine Methode von Behauptung 7, worin die Zündungstemperatur des grünen Körpers ungefähr zwischen 1200 °C und 1700 °C liegt und die Haltezeiten zwischen 1 und 48h sind.

## Revendications

1. Une méthode de fabrication d'une structure céramique NZP avec porosité ouverte au-dessus de 20% et flexure au-dessus de 10.36 N/mm2 (1500 livres par pouce carré) sans l'utilisation d'aide agglomérée ou formeur de pores, qui comporte:
a. La formation d'un mélange contenant des poudres de formation NZP de matières premières se composant des oxydes de métal, des sels de carbonate en métal et des sels de phosphate, capables de réagir à former à la fin une structure de NZP ayant la formule générale R×Z4P6-ySiyO24, où R représente un alcali ou un atome de terre alcaline, x prend des valeurs entre 0 et 8, Z représente le Zr, Ti, Nb , Ta, le Y ou un lanthanide, P représente le phosphore, Si représente le silicium, O représente l'oxygène et y prend des valeurs entre 0 et 6.
b. Le moulage humide des matières premières en présence d'un liquide.
c. La cuisson du mélange de matières premières afin qu'elles réagissent pour former une poudre précurseur fortement poreuse
d. Le moulage humide de la poudre précurseur et puis la formation d'une masse extradable:
e. La formation en corps vert
f. La cuisson lancement à incendie de la structure verte afin que la poudre précurseur réagisse et forme la phase NZP, produisant en même temps une structure cuite ayant NZP comme phase principale et une porosité ouverte de au moins 20%

2. Une méthode revendiquée 1 où la structure NZP est produite suivant un processus en deux étapes, c'est-à-dire la formation d'une poudre précurseur dans une première étape suivie de la formation de la structure NZP de la poudre précurseur

3. Une méthode revendiquée 1 où le phosphate d'hydrogène d'ammonium (NH4H2PO4) est la source du phosphore. La source d'atomes de Z et de R servent des oxydes de métal et des sels de carbonate en métal respectivement, tandis que la source du silicium est l'oxyde de silicium dans l'état cristallin ou amorphe.

4. Une méthode revendiquée 3 où le liquide dans le moulage humide des matières premières est l'acétone

5. Une méthode revendiquée 4 où les matières premières sont cuites afin d'obtenir une poudre précurseur de NZP.

6. Une méthode revendiquée 5 où la température de mise à feu des matières premières est environ 600 °C à 1000°C et les temps d'attente sont de 1 à 24h

7. Une méthode revendiquée 6 où la poudre précurseur est formée par extrusion, pression sèche, moulage en barbotine, moulage en bande, moulage par injection ou moulage en centrifuge.

8. Une méthode revendiquée 7 où la température de mise à feu du corps vert est environ entre 1200 °C et 1700 °C et les temps d'attente entre 1 et 48h.
